# EUROPEAN PATENT APPLICATION

(11) **EP 4 807 880 A1**
(43) Date of publication of application: **16.09.2026**
(21) Application number: 25731401.3
(22) Date of filing: 23.01.2025
(51) Int. Cl.: H01M 50/342, H01M 50/105, H01M 50/15, H01M 50/553

(54) **BATTERY APPARATUS AND ELECTRICAL DEVICE**

(71) Applicant: CONTEMPORARY AMPEREX TECHNOLOGY (HONG KONG) LIMITED, Hong Kong (HK)
(72) Inventor: QIAN, Ou, Ningde, Fujian 352100 (CN); LI, Yao, Ningde, Fujian 352100 (CN); JIANG, Shixin, Ningde, Fujian 352100 (CN)
(74) Representative: Gong, Jinping
(86) International application number: PCT/CN2025/074365
(87) International publication number: WO 2026/156617

(57) **Abstract**

Disclosed are a battery apparatus (100) and an electric device (200). A U-shaped enclosing shell (21) is adhesively connected to a case (10) through an adhesive layer (12), and busbar supports (23) are disposed on the U-shaped enclosing shell (21) and are each connected to the U-shaped enclosing shell (21) through a connecting part (231). The U-shaped enclosing shell (21) is provided with a pressure relief part (2111), a shear strength of the connecting part (231) is greater than a first preset value, where the first preset value is greater than or equal to 0.1 Mpa, and an adhesive strength of the adhesive layer (12) is greater than a second preset value, where the second preset value is greater than or equal to 1 Mpa.

## Description

### TECHNICAL FIELD

The present application relates to the technical field of batteries, and in particular, to a battery apparatus and an electric device.

### BACKGROUND

In the related art, the pouch battery cell has the problem of high difficulty in directional pressure relief, which affects the further improvement of the reliability of the pouch battery apparatus.

### SUMMARY

The present application aims to solve at least one of the technical problems existing in the prior art. To this end, an objective of the present application is to propose a battery apparatus and an electric device. The battery apparatus can stably realize directional pressure relief and has relatively high reliability.

The present application provides a battery apparatus, including: a case and a battery set. The battery set includes an enclosing shell U-shaped enclosing shell, a plurality of pouch battery cells, and busbar member busbar supports. The enclosing shell U-shaped enclosing shell is adhesively connected to the case through an adhesive layer, the busbar member busbar supports are disposed on the enclosing shell U-shaped enclosing shell and are each connected to the enclosing shell U-shaped enclosing shell through a connecting part, the enclosing shell U-shaped enclosing shell, the case, and the busbar member busbar supports jointly form an accommodating space, and the plurality of pouch battery cells are disposed in the accommodating space and electrically connected through the busbar member busbar supports. The U-shaped enclosing shell is provided with a pressure relief part, a shear strength of the connecting part is greater than a first preset value, where the first preset value is greater than or equal to 0.1 Mpa, and an adhesive strength of the adhesive layer is greater than a second preset value, where the second preset value is greater than or equal to 1 Mpa.

According to the battery apparatus provided by embodiments of the present application, by making the shear strength of the connecting part greater than the first preset value and the adhesive strength of the adhesive layer greater than the second preset value, when a thermal runaway occurs in the battery set, the pressure relief part may be preferentially ruptured for directional pressure relief, and during the directional pressure relief process, the probabilities of connection failure between the connecting part and the U-shaped enclosing shell and between the U-shaped enclosing shell and the adhesive layer are lower, so as to improve the reliability and stability of the directional pressure relief, thereby improving the reliability of the battery apparatus.

According to some embodiments of the present application, the U-shaped enclosing shell includes: a first plate with a pressure relief part formed thereon and second plates located on both sides of the first plate, the busbar supports are located at both ends of the length of the U-shaped enclosing shell, and the connecting part is connected to the first plate and/or the second plates.

According to some embodiments of the present application, the connecting part includes a fitting post, and the connecting part is inserted into an insertion slot formed in the first plate and/or the second plates.

According to some embodiments of the present application, a size of an orthographic projection of the fitting post facing the insertion slot is greater than a size of an opening of the insertion slot, such that the fitting post is in an interference fit with the insertion slot.

According to some embodiments of the present application, the size of the projection of the fitting post facing the insertion slot is greater than the size of the opening by 0.2-1 mm.

According to some embodiments of the present application, the connecting part includes an overlap plate, and the overlap plate is connected to the first plate and/or the second plates.

According to some embodiments of the present application, a numerical range of an overlap size between the overlap plate and the first plate and/or the second plates, and/or the overlap size of the second plates is 1-5 mm.

According to some embodiments of the present application, the overlap plate is fixed to the first plate and/or the second plates by adhesive connection, welding connection, or screw connection.

According to some embodiments of the present application, the connecting part includes a first snap structure, and a second snap structure in a snap fit with the first snap structure is formed on an end part of the length of the first plate and/or the second plates.

According to some embodiments of the present application, each of the busbar supports further includes: an insulating body and a sealing part. The sealing part is located between the insulating body and the pouch battery cells, and the connecting part is disposed in the insulating body. A first groove and a second groove are formed in the insulating body, the first groove is located on a surface of the insulating body facing the pouch battery cell, the second groove is located on a surface of the insulating body on an adjacent side and penetrates through the insulating body, and the first groove is in communication with the second groove. The first groove is suitable for accommodating a tab, and the second groove is suitable for accommodating a busbar conductor electrically connected to the tab.

According to some embodiments of the present application, when an energy density of the pouch battery cells is 450-600 Wh/L, the shear connection strength between the connecting part and the enclosing shell is 0.1-0.2 MPa, and the adhesive strength of the adhesive layer is 1-2.5 MPa;

when an energy density of the pouch battery cells is 600-700 Wh/L, the shear strength of the connection between the connecting part and the enclosing shell is 0.2-0.3 Mpa, and the adhesive strength of the adhesive layer is 2.5-5.5 Mpa;

when an energy density of the pouch battery cells is greater than 700 Wh/L, the shear strength of the connecting part and the connection strength of the enclosing shell are 0.3-0.5 Mpa, and the adhesive strength of the adhesive layer is 5.5-10.5 Mpa.

According to some embodiments of the present application, a plurality of the pressure relief parts are provided. The plurality of the pressure relief parts are spaced apart from each other in the length direction and/or the width direction of the first plate.

According to some embodiments of the present application, the first plate is configured as a flat plate or an arc-shaped plate.

According to some embodiments of the present application, each of the pouch battery cells includes: a flexible outer shell and an electrode assembly disposed within the flexible outer shell. The flexible outer shell has a side surface opposite to a large surface of the electrode assembly and a circumferential surface avoiding the large surface, and the second plate is opposite to the side surface.

According to some embodiments of the present application, an area of a projected contour of the second plate facing the side surface of the flexible outer shell is less than or equal to an area of the side surface.

According to some embodiments of the present application, a pressure relief weak part is formed on the circumferential surface, the weak pressure relief part is opposite to the first plate, and the pressure relief part is at least partially opposite to the weak part.

According to some embodiments of the present application, the first plate is spaced apart from the side of the circumferential surface provided with the weak pressure relief part to define an exhaust channel.

According to some embodiments of the present application, the U-shaped enclosing shell is constructed as an aluminum shell or a stainless steel shell.

According to some embodiments of the present application, an end surface of each of the pouch battery cells on a side far away from the first plate is connected to the case through an adhesive layer.

According to some embodiments of the present application, the case is provided with a bottom plate. The bottom plate is connected to each of the pouch battery cells through the adhesive layer.

According to some embodiments of the present application, the bottom plate includes a cold plate. The adhesive layer is located between the cold plate and the plurality of pouch battery cells.

According to some embodiments of the present application, the adhesive layer includes: an adhesive layer body and an adhesive overflow part. The adhesive overflow part is located on a side of the adhesive layer body facing a plurality of pouch battery cells, and is located between adjacent pouch battery cells and/or between the pouch battery cells and the second plates.

According to some embodiments of the present application, each of the pouch battery cells is any one of a lithium iron phosphate battery cell, a ternary lithium battery cell, and a solid-state battery cell.

According to some embodiments of the present application, when each of the battery cells is a lithium iron phosphate battery cell, in a positive electrode material of each of the battery cells, a usage ratio of the positive electrode active material, the positive electrode binder, and the positive electrode conductive agent is 96:1-3:1-3. When each of the battery cells is a ternary lithium battery, in a positive electrode material of the battery cell, a usage ratio of the positive electrode active material, the positive electrode binder, and the positive electrode conductive agent is 96:2-3:1-2.

The present application provides an electric device, including: the battery apparatus in the embodiments described above.

According to some embodiments of the present application, the electric device is a vehicle.

According to some embodiments of the present application, the battery apparatus is integrated in a chassis of the vehicle and an upper cover of the case participates in defining a vehicle body floor.

The additional aspects and the advantages of the present application will be partially provided in the following description, which will become apparent from the following description, or will be learned through the practice of the present application.

### BRIEF DESCRIPTION OF THE DRAWINGS

The above and/or additional aspects and advantages of the present application will become apparent and readily understood from the description of embodiments in conjunction with the accompanying drawings below, in which:
FIG. 1 is a schematic diagram of an electric device according to an embodiment of the present application;
FIG. 2 is schematic diagram of a battery apparatus according to an embodiment of the present application;
FIG. 3 is a schematic diagram of a battery set according to a first embodiment of the present application;
FIG. 4 is another schematic diagram of the battery set according to the first embodiment of the present application;
FIG. 5 is a schematic diagram of a busbar support according to the first embodiment of the present application;
FIG. 6 is a schematic diagram of a battery set according to a second embodiment of the present application;
FIG. 7 is another schematic diagram of the battery set according to the second embodiment of the present application;
FIG. 8 is a schematic diagram of a busbar support according to the second embodiment of the present application;
FIG. 9 is a schematic diagram of a battery set according to a third embodiment of the present application;
FIG. 10 is a schematic diagram of a battery cell according to an embodiment of the present application;
FIG. 11 is a schematic diagram of the cooperation between a U-shaped enclosing shell and a battery cell according to an embodiment of the present application; and
FIG. 12 is a schematic diagram of the cooperation of a case and a battery set according to an embodiment of the present application.

### DETAILED DESCRIPTION

Embodiments of the present application are described in detail hereinafter, with examples of the embodiments illustrated in the accompanying drawings. Throughout the accompanying drawings, the same or similar reference numbers indicate the same or similar elements or elements having the same or similar functions. The embodiments described hereinafter with reference to the accompanying drawings are exemplary and are only intended to explain the present application. They should not be construed as limiting the scope of the present application.

In the description of the present application, it should be understood that the terms "center", "upper", "lower", "front", "rear", "left", "right", "vertical", "horizontal", "top", "bottom", "inner", "outer", and the like indicate orientations or positional relationships based on those shown in the drawings, which is merely for the convenience of describing the present application and simplifying the description, rather than indicating or implying that the apparatus or element referred to must have a specific orientation, be constructed and operate in the specific orientation, so it cannot be understood as a limitation to the present application.

It should be noted that the terms "first" and "second" are used herein for descriptive purposes only and should not be construed as indicating or implying relative importance or implicitly indicating the number of technical features described. Therefore, features defined with "first" or "second" may explicitly or implicitly include one or more of the features. Further, in the descriptions of the present application, "a plurality" means two or more, unless otherwise specified.

The battery cell may be a secondary battery, which refers to a battery cell that can continue to be used by activating the active material by charging after the battery cell is discharged.

The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead storage battery, or the like, which is not limited in the embodiments of the present application.

The battery apparatus described in the embodiments of the present application may refer to one or more battery sets for providing voltage and capacity. The battery set may include a plurality of battery cells connected in series, in parallel, or in series-parallel through busbar supports.

In some embodiments, the battery set is generally formed by arranging a plurality of battery cells.

In some embodiments, the battery apparatus may be a battery pack. The battery pack includes a case and one or more battery sets, and the battery sets are accommodated in the case.

As an example, the battery set may be accommodated in the case by being fixed in the case.

As an example, the case may include a first case and a second case. The first case is buckled with the second case, such that a closed space is formed inside the case to accommodate the battery set. The term "closed" used herein refers to being covered or shut, which may be either sealed or unsealed. The first case may be a top cover or a bottom plate.

As an example, the case may include a top cover, a frame, and a bottom plate. The top cover and the bottom plate are separately connected to the frame, such that a closed space is formed inside the case to accommodate the battery set.

In some embodiments, the case may be a part of a chassis structure of the vehicle. For example, parts of the case may become at least a part of a floor of the vehicle, or parts of the case may become at least a part of a cross member and a side member of the vehicle.

The technical solutions described in the embodiments of the present application are suitable for the battery apparatus and the electric device using the battery apparatus.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric device described above is not specially limited in the embodiments of the present application.

For ease of explanation, the following embodiments will be described by taking a vehicle as an example of the electric device.

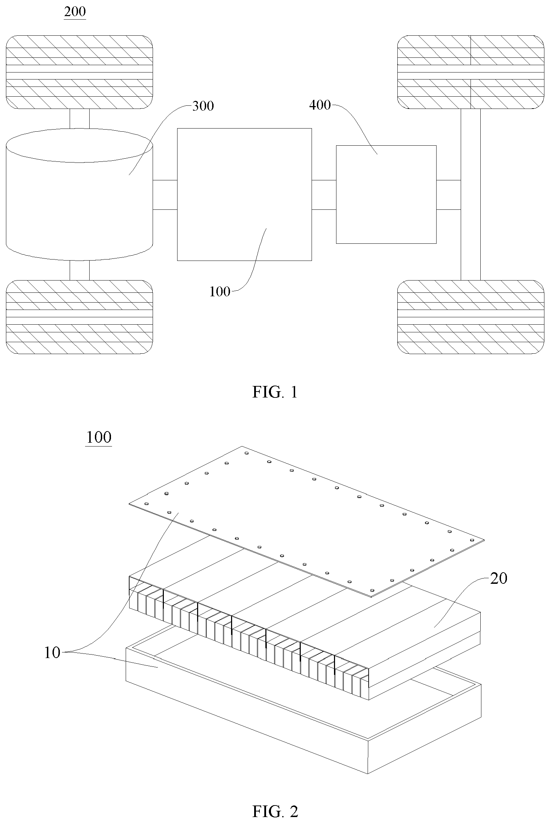

Referring to FIG. 1, FIG. 1 is a schematic structural diagram of a vehicle according to some embodiments of the present application. A battery apparatus 100 is disposed inside the vehicle, and the battery apparatus 100 may be disposed at the bottom, head, or tail of the vehicle. The battery apparatus 100 may be used for powering the vehicle. For example, the battery apparatus 100 may serve as an operation power source for the vehicle.

The vehicle may further include a controller 400 and a motor 300. The controller 400 is used for controlling the battery apparatus 100 to power the motor 300, and the motor 300 is formed as a load, e.g., for operation power needed by the vehicle for start-up, navigation, and driving.

In some embodiments of the present application, the battery apparatus 100 may not only serve as the operation power source for the vehicle, but also as a driving power source for the vehicle to, instead of or in part instead of fuel or natural gas, provide driving power for the vehicle.

Referring to FIG. 2, FIG. 2 is an exploded view of a battery apparatus 100 according to some embodiments of the present application. The battery apparatus 100 includes a case 10, and the case 10 is used for accommodating battery cells.

The case 10 is a component for accommodating the battery cells, the case 10 provides a placement space for a battery set 20, and the case 10 may be of various structures. In some embodiments, the case 10 may include a tray and a cover plate. The tray and the cover plate are lidded with each other to define a placement space for accommodating the battery cells. The tray and the cover plate may be in various shapes, such as a cuboid and a cylinder. The tray may be of a hollow structure with one side opened, and the cover plate may also be of a hollow structure with one side opened. The open side of the cover plate lids the open side of the tray to form the case 10 having a placement space. The tray may also be of a hollow structure with one open side, and the cover plate may be of a plate-like structure. The cover plate lids the open side of the tray to form the case 10 having a placement space.

In the battery apparatus 100, one or more battery cells may be provided. A plurality of battery cells are loaded as one battery set 20 through a U-shaped enclosing shell 21, and one or more battery sets 20 are loaded into the case 10. If a plurality of battery cells are provided, the plurality of battery cells may be connected in series, in parallel, or in series-parallel. The series-parallel connection means that both series connection and parallel connection are present for the connection among the plurality of battery cells. A plurality of battery cells may be first connected in series, in parallel, or in series-parallel to form the battery set 20, and a plurality of battery sets 20 may be then connected in series, in parallel, or in series-parallel to form a whole to be accommodated in the case 10.

The battery cell, as the smallest energy unit of the battery apparatus 100, includes a flexible outer shell 221 and an electrode assembly 222 disposed in the flexible outer shell 221.

The internal environment formed by the flexible outer shell 221 may be used for accommodating the electrode assembly 222, an electrolytic solution, and other components. An opening may be formed in one side of the flexible outer shell 221 for injecting the electrolytic solution and inserting the electrode assembly 222 into the case.

The flexible outer shell 221 may be further provided with electrode terminals, and the electrode assembly 222 is a component of the battery cell in which the electrochemical reaction occurs. One or more electrode assemblies 222 may be contained in the flexible outer shell 221. The electrode assembly 222 is mainly formed by winding or laminating a positive electrode plate and a negative electrode plate, and a separation film is usually disposed between the positive electrode plate and the negative electrode plate. The portions of the positive electrode plate and the negative electrode plate that contain the active substance constitute the body part of the electrode assembly 222, and the portions of the positive electrode plate and the negative electrode plate that do not contain the active substance each constitute a tab. The positive electrode tab and the negative electrode tab may be located at both ends of the body part, respectively. Both ends of the battery set 20 are provided with busbar supports 23. During the charging and discharging process of the battery apparatus 100, the positive and negative electrode active materials react with the electrolytic solution, and the tabs are connected to the busbar supports 23 to form a current circuit.

A positive electrode plate may generally include a positive electrode current collector and a positive electrode film layer disposed on at least one surface of the positive electrode current collector. The positive electrode film layer includes a positive electrode active material.

As an example, the positive electrode current collector has two surfaces opposite to each other in its own thickness direction, and the positive electrode film layer is disposed on either or both of the two opposite surfaces of the positive electrode current collector.

As an example, a metal foil or a composite current collector may be used as the positive electrode current collector. For example, stainless steel, copper, aluminum, nickel, carbon electrode, carbon, titanium, aluminum or stainless steel with silver surface treatment, or the like may be used as the metal foil. The composite current collector may include a polymer material substrate and a metal layer. The composite current collector may be fabricated by forming a metal material (aluminum, aluminum alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

As an example, when each of the pouch battery cells 22 in the embodiments of the present application is a lithium ion battery, the positive electrode active material may include at least one of the following materials: a phosphate, a layered transition metal oxide, and respective modified compounds thereof; optionally, the positive electrode active material may include a layered transition metal oxide and a modified compound thereof, which is conducive to improving the energy density of the pouch battery cells 22. However, the present application is not limited to these materials, and other traditional materials that may be used as positive electrode film layers for batteries may also be used. These positive electrode active materials may be used alone or in combination of two or more.

Examples of the phosphates may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

The layered transition metal oxide includes at least one of a compound of general formula LiₐNi_{b}Co_{c}M_{d}OₑA_{f} and a modified compound thereof. 0.8 ≤ a ≤ 1.2, 0.3 ≤ b < 1, 0 < c < 1, 0 < d < 1, 1 ≤ e ≤2, 0 ≤ f ≤ 1, M includes at least one of Mn, Al, Zr, Zn, Cu, Cr, Mg, Fe, V, Ti and B, and A includes at least one of N, F, S, and Cl. Optionally, 0.5 ≤ b < 1, and further optionally, 0.75 ≤ b ≤ 0.98.

Examples of the layered transition metal oxide may include, but are not limited to, at least one of a lithium cobalt oxide (such as LiCoO₂), a lithium nickel oxide (such as LiNiO₂), a lithium manganese oxide (such as LiMnO₂ and LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), LiNi_{0.9}Co_{0.05}Mn_{0.05}O₂ (also referred to as Ni90)), a lithium nickel cobalt oxide (such as LiNi_{0.80}Co_{0.15}Al_{0.05}O₂), and modified compounds thereof.

When each of the pouch battery cells 22 in the embodiments of the present application is a sodium ion battery, the positive electrode active material may include, but is not limited to, at least one of a sodium-containing transition metal oxide, a polyanion material (such as phosphate, fluorophosphate, pyrophosphate, and sulfate), and a Prussian blue material.

As an example, the positive electrode active material for a sodium ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, a material of general formula XₚM'_{q}(PO₄)ᵣOₓY₃₋ₓ. In general formula XₚM'_{q}(PO₄)ᵣOₓY₃₋ₓ, 0 < p ≤ 4,0 < q ≤ 2, 1 ≤ r ≤ 3, 0 ≤ x ≤ 2, X includes at least one of H+, Li+, Na+, K+, and NH4+, M' is a transition metal cation, and optionally at least one of V, Ti, Mn, Fe, Co, Ni, Cu, and Zn, and Y is a halogen anion, and optionally at least one of F, Cl, and Br.

In the embodiments of the present application, the modified compounds of the positive electrode active materials described above may be compounds obtained by doping modification and/or surface-coating modification of the positive electrode active material, e.g., carbon-coating modification, fast ion conductor-coating modification, and the like.

During the charging and discharging process of the pouch battery cell 22, the deintercalation and consumption of active ions such as Li will occur. The molar content of Li varies when the pouch battery cell 22 is discharged to different states. In the list of the positive electrode active materials in the embodiments of the present application, the molar content of Li is that in an initial state of the materials, that is, a state before feeding. The molar content of Li may change after the charge and discharge cycle when the positive electrode active materials are applied to a battery system.

In the list of the positive electrode active materials in the embodiments of the present application, the molar content of oxygen O is only a theoretical value. The molar content of oxygen O varies due to oxygen release from the crystal lattice, and actually, the molar content of oxygen O fluctuates.

In the embodiments of the present application, the content of the element in the positive electrode active material has a meaning well known in the art, and may be detected by using devices and methods well known in the art. For example, it may be tested by inductively coupled plasma atomic emission spectrometry using an inductively coupled plasma optical emission spectrometer (ICP-OES, instrument model: Thermo ICAP7400) with reference to EPA 6010D-2014. First, 0.4 g of the positive electrode active material is weighed, and 10 mL (50% concentration) of aqua regia is added thereto. Then, the mixture is placed on a plate at 180 °C for 30 min. After digestion on the plate, the volume is brought to 100 mL and a quantitative test is performed by using a standard curve method.

In some embodiments, a foam metal may be used as the positive electrode. The foam metal may be foam nickel, foam copper, foam aluminum, foam alloy, or the like. When the foam metal is used as the positive electrode, the surface of the foam metal may not be provided with a positive electrode film layer. Certainly, it may also be provided with a positive electrode film layer. As an example, the foam metal may also be filled or/and deposited with a lithium source material, potassium metal, or sodium metal. The lithium source material is lithium metal and/or a lithium-rich material.

In some embodiments, the positive electrode film layer further optionally includes a positive electrode conductive agent. The embodiments of the present application do not particularly limit the type of the positive electrode conductive agent. As an example, the positive electrode conductive agent includes at least one of superconducting carbon, conductive graphite, acetylene black, carbon black, Ketjen black, a carbon dot, a carbon nanotube, graphene, and a carbon nanofiber. In some embodiments, the mass percentage content of the positive electrode conductive agent in the positive electrode film layer is ≤ 5 wt%.

In some embodiments, the positive electrode film layer further optionally includes a positive electrode binder. The embodiments of the present application do not particularly limit the type of the positive electrode binder. As an example, the positive electrode binder may include at least one of polyvinylidene difluoride (PVDF), polytetrafluoroethylene (PTFE), vinylidene difluoride-tetrafluoroethylene-propylene terpolymer, vinylidene difluoride-hexafluoropropylene-tetrafluoroethylene terpolymer, tetrafluoroethylene-hexafluoropropylene copolymer, and fluorinated acrylic resins. In some embodiments, the mass percentage content of the positive electrode binder in the positive electrode film layer is ≤ 5 wt%.

The positive electrode film layer is generally formed by coating a positive electrode current collector with a positive electrode slurry, and performing drying and cold pressing. The positive electrode slurry is generally formed by dispersing the positive electrode active material, an optional conductive agent, an optional binder, and any other components in a solvent and performing uniform stirring. The solvent may be N-methylpyrrolidone (NMP), but is not limited thereto.

In some embodiments, the negative electrode may be a negative electrode plate, and the negative electrode plate may include a negative electrode current collector and a negative electrode film layer disposed on at least one surface of the negative electrode current collector. The negative electrode film layer includes a negative electrode active material.

As an example, the negative electrode current collector has two surfaces opposite to each other in its own thickness direction, and the negative electrode film layer is disposed on either or both of the two opposite surfaces of the negative electrode current collector.

As an example, a metal foil, a foam metal, or a composite current collector may be used as the negative electrode current collector. For example, for the metal foil, aluminum or stainless steel treated with silver on the surface, stainless steel, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material substrate and a metal layer. The composite current collector may be fabricated by forming a metal material (copper, a copper alloy, nickel, a nickel alloy, titanium, a titanium alloy, silver and a silver alloy, etc.) on a polymer material substrate (such as a substrate made of polypropylene, polyethylene terephthalate, polybutylene terephthalate, polystyrene, and polyethylene).

As an example, the negative electrode active material well known in the art for the pouch battery cell 22 may be used as the negative electrode active material. As an example, the negative electrode active material may include at least one of the following materials: a carbon material (for example, the carbon material includes at least one of artificial graphite, natural graphite, soft carbon, and hard carbon), a silicon-based material, a tin-based material, lithium titanate, and the like. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxygen compound, and a tin alloy. However, the present application is not limited to these materials, and other traditional materials that may be used as negative electrode film layers for batteries may also be used. These negative electrode film layers may be used alone or in combination of two or more.

In some embodiments, the negative electrode active material includes elemental silicon, which may be present in the form of the silicon-based material. For example, the silicon-based material may include at least one of elemental silicon, a silicon-oxygen compound, a silicon-carbon composite, a silicon-nitrogen composite, and a silicon alloy. Due to the introduction of the silicon element, the energy density of the pouch battery cells 22 can be improved.

In some embodiments, the mass content of the silicon element in the negative electrode film layer is 1 wt% to 32 wt%, optionally 2 wt% to 19 wt%, and further preferably 6 wt% to 13 wt%. Under a system of the pouch battery cells 22, when the mass content of the silicon element is within the range described above, the energy density of the pouch battery cells 22 can be improved.

In the embodiments of the present application, the mass content of the silicon element in the negative electrode film layer is well known in the art, and can be detected by using devices and methods known in the art. For example, a negative electrode plate is soaked in a solvent (e.g., water) to separate a negative electrode active material from a negative electrode current collector, suction filtration is performed to obtain the negative electrode active material, and the negative electrode active material is tested using an inductively coupled plasma optical emission spectrometer (model: ICAP7400, Thermo Fisher Scientific, USA) with reference to the standard GB/T 30902-2014.

In some embodiments, the negative electrode film layer further optionally includes a negative electrode conductive agent. The embodiments of the present application do not particularly limit the type of the negative electrode conductive agent. As an example, the negative electrode conductive agent may include at least one of superconducting carbon, conductive graphite, acetylene black, carbon black, Ketjen black, a carbon dot, a carbon nanotube, graphene, and a carbon nanofiber. In some embodiments, the mass percentage content of the negative electrode conductive agent in the negative electrode film layer is ≤ 5 wt%.

In some embodiments, the negative electrode film layer further optionally includes a negative electrode binder. The embodiments of the present application do not particularly limit the type of the negative electrode binder. As an example, the negative electrode binder may include at least one of styrene-butadiene rubber (SBR), water-soluble unsaturated resin SR-1B, aqueous acrylic resins (e.g., polyacrylic acid PAA, polymethacrylic acid PMAA, and sodium polyacrylate PAAS), polyacrylamide (PAM), polyvinyl alcohol (PVA), sodium alginate (SA), and carboxymethyl chitosan (CMCS). In some embodiments, the mass percentage content of the negative electrode binder in the negative electrode film layer is ≤ 5%.

In some embodiments, the negative electrode film layer further optionally includes other auxiliary agents. As an example, the other auxiliary agents may include a thickener (e.g., sodium carboxymethylcellulose (CMC-Na)), a PTC thermistor material, and the like. In some embodiments, the mass percentage content of the other auxiliary agents in the negative electrode film layer is ≤ 2 wt%.

In some embodiments, the positive electrode current collector may be made of aluminum, and the negative electrode current collector may be made of copper.

In some embodiments, the separator includes a separation film. The present application does not particularly limit the type of the separation film, and any porous-structure separation film known to have good chemical stability and mechanical stability may be selected and used.

The embodiments of the present application do not particularly limit the type of the separation film, and any porous-structure separation film known to have good chemical stability and mechanical stability may be selected and used.

In some embodiments, the separation film may be made of a material including one or more of a glass fiber, a nonwoven fabric, polyethylene, polypropylene, and polyvinylidene difluoride. The separation film may be a single-layer film or a multi-layer composite film, which is not particularly limited. When the separation film is a multi-layer composite film, the materials of the layers may be the same or different, which is not particularly limited.

In some embodiments, the separation film may include a porous base film and a coating layer disposed on at least one side of the porous base film. The coating layer may include at least one of inorganic particles or organic particles.

The porous base film may include one or more of polyethylene and polypropylene.

The inorganic particles have relatively good heat resistance, which can improve the overall heat resistance of the separation film. Within an operating voltage range of the sodium ion battery, the inorganic particles substantially do not undergo oxidation and reduction reactions with metal dendrites. In other words, the inorganic particles are configured not to undergo oxidation and reduction reactions with alkali metals and/or alkaline earth metals at a nominal voltage of the sodium ion battery.

In some embodiments, the inorganic particles include one or more of boehmite γ-AlOOH, aluminium oxide Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, zirconium titanate SrTiO₃, barium titanate BaTiO₃, and magnesium fluoride MgF₂.

In some embodiments, the organic particles include at least one of polystyrene, polyethylene, polyimide, melamine resins, phenolic resins, polypropylene, polyesters (e.g., polyethylene terephthalate, polyethylene naphthalate, and polybutylene terephthalate), polyphenylene sulfide, polyaryl amide, polyamide-imide, polyimide, copolymers of butyl acrylate and ethyl methacrylate, and mixtures thereof.

In some embodiments, each of the pouch battery cells 22 further includes an electrolytic solution.

During the charging and discharging process of the battery cells, active ions are intercalated and deintercalated back and forth between the positive electrode plate and the negative electrode plate, and the electrolytic solution plays a role in conducting the active ions between the positive electrode plate and the negative electrode plate. The embodiments of the present application do not particularly limit the type of the electrolytic solution, which may be selected according to actual requirements.

The electrolytic solution includes an electrolyte salt and a solvent. The types of the electrolyte salt and the solvent are not particularly limited, and may be selected according to actual requirements.

In some embodiments, the electrolytic solution further optionally includes an additive. For example, the additive may include a negative electrode film-forming additive, or may include a positive electrode film-forming additive, or may include an additive capable of improving certain properties of the battery, e.g., an additive for improving the overcharge performance of the battery, an additive for improving the high-temperature performance of the battery, an additive for improving the low-temperature power performance of the battery, etc.

For example, the additive includes at least one of a cyclic carbonate compound, a sulfate compound, a sulfite compound, a sultone compound, a disulfonic acid compound, a nitrile compound, an aromatic compound, an isocyanate compound, a phosphazene compound, an acid anhydride, a cyclic acid anhydride compound, a phosphite compound, a phosphate compound, a borate ester, and a carboxylate compound, which contain unsaturated bonds.

In the related art, a pressure relief part 2111 is disposed on the pouch battery cells 22, a pressure relief part 2111 is disposed on the enclosing shell U-shaped enclosing shell 21, and directional pressure relief of the pouch battery cells 22 and the battery set 20 can be realized through the pressure relief part 2111 and the pressure relief part 2111. However, during the directional pressure relief process, a connection region between each of the busbar member busbar supports 23 and the enclosing shell U-shaped enclosing shell 21 easily fails under the action of pressure, and an adhesive layer 12 between the battery set 20 and the case 10 also easily fails in adhesion, such that the connection between each of the busbar member busbar supports 23 and the enclosing shell U-shaped enclosing shell 21 fails, and further directional pressure relief fails, which easily leads to secondary damage, thereby reducing the reliability of the battery set 20.

Based on this, the present application provides a battery apparatus 100. The connection strength between the enclosing shell U-shaped enclosing shell 21 and the busbar member busbar supports 23 is greater than the structural strength of a pressure relief part 2111, and the shear strength of a connecting part 231 is greater than a first preset value. A battery set 20 and a case 10 are bonded by an adhesive layer 12, and the adhesive strength is greater than a second preset value, such that when the pressure relief part 2111 releases pressure, the probability of connection failure between the enclosing shell U-shaped enclosing shell 21 and the busbar member busbar supports 23, and between the U-shaped enclosing shell 21 and the case 10 can be reduced, so as to improve the stability and reliability of directional pressure relief and reduce secondary damage, thereby improving the reliability of the battery apparatus 100.

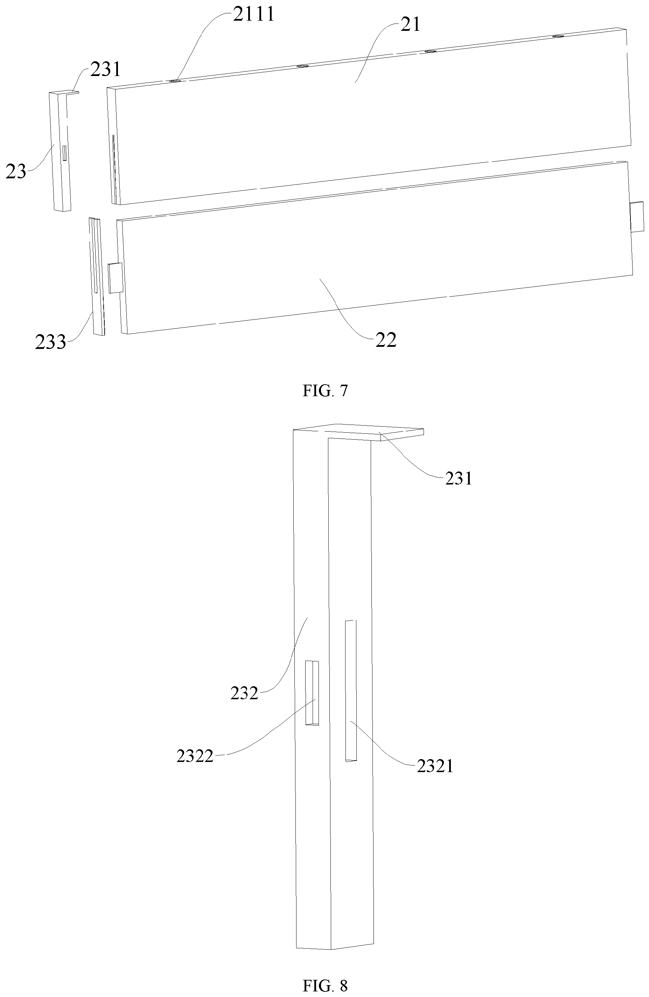

The battery apparatus 100 and the electric device 200 according to the embodiments of the present utility model are described below with reference to FIGs. 1-12.

Referring to FIGs. 2, 11 and 12, the present application provides a battery apparatus 100, including: a case 10 and a battery set 20. The battery set 20 is disposed in the case 10.

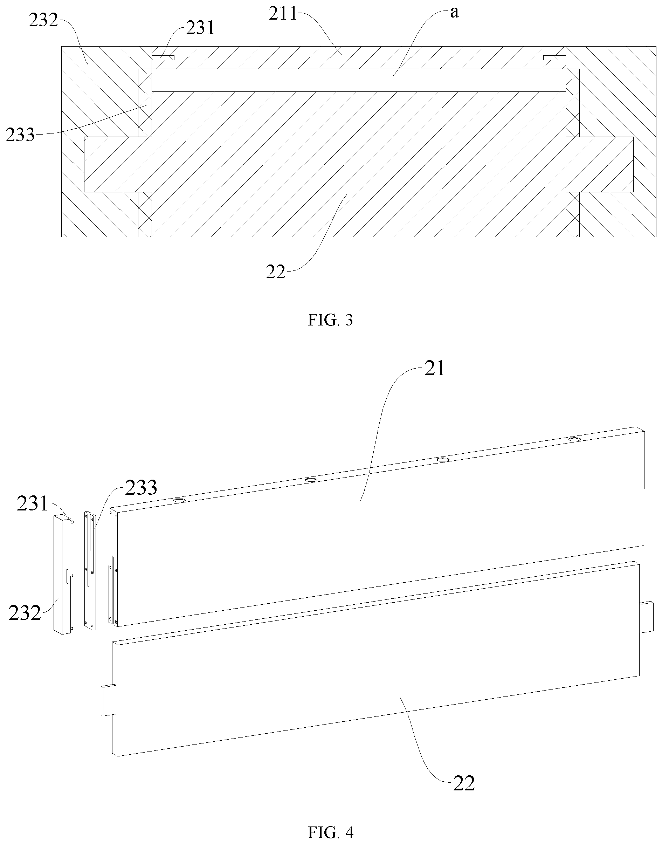

As shown in FIGs. 3, 6 and 9, the battery set 20 includes an enclosing shell U-shaped enclosing shell 21, a plurality of pouch battery cells 22, and busbar member busbar supports 23. The enclosing shell U-shaped enclosing shell 21 and the case 10 are adhesively connected by an adhesive layer 12 (the adhesive layer 12 may be configured as a structural adhesive), the busbar member busbar supports 23 are disposed on the enclosing shell U-shaped enclosing shell 21 and are each connected to the enclosing shell U-shaped enclosing shell 21 through a connecting part 231, the enclosing shell U-shaped enclosing shell 21, the case 10, and the busbar member busbar supports 23 jointly form an accommodating space, and the plurality of pouch battery cells 22 are disposed in the accommodating space and electrically connected through the busbar member busbar supports 23.

Specifically, as shown in FIGs. 4, 6 and 10, tabs are led out from both ends in the length direction of the pouch battery cells 22, two busbar member busbar supports 23 are provided, which are disposed at both ends of the length of the pouch battery cells 22, respectively, and electrically connected to the two tabs, respectively, so as to realize the electrical connection between the pouch battery cells 22 and the outside. The busbar member busbar supports 23 are connected to the enclosing shell U-shaped enclosing shell 21 to define an accommodating space, and the pouch battery cells 22 are disposed in the accommodating space, such that support and protection are provided around the pouch battery cells 22 by the enclosing shell U-shaped enclosing shell 21 and the busbar member busbar supports 23.

Further, the U-shaped enclosing shell 21 is provided with a pressure relief part 2111. The pressure relief part 2111 is used for discharging high-temperature and high-pressure gas in the accommodating space and particulate matters entrained in the gas (i.e., high-temperature gas-fire flow) when a thermal runaway occurs in each of the pouch battery cells 22, such that directional pressure relief of the battery set 20 may be realized, which enables the battery set 20 to release pressure toward a direction where the pressure relief part 2111 is located, so as to realize orderly pressure relief, thereby reducing secondary damage to an insulating interface of the battery apparatus 100 and slowing down the propagation speed of thermal runaway.

It should be noted that the insulating interface of the battery apparatus 100 includes: an insulating structure between adjacent pouch battery cells 22, an insulating structure between adjacent battery sets 20, an insulating structure between the battery set 20 and surrounding components, etc. By realizing the orderly discharge of the high-temperature gas-fire flow, the impact on the insulating interface when the battery set 20 releases pressure can be reduced, so as to reduce the probability of secondary damage and improve the reliability.

It may be understood that if the connection strength between the connecting part 231 and the enclosing shell 21 is less than the structural strength of the pressure relief part 2111, when a thermal runaway occurs in each of the pouch battery cells 22 and the high-pressure gas-fire flow acts on the connecting part 231 or the connection region between the connecting part 231 and the U-shaped enclosing shell 21, the shear force that can be borne by the connecting part 231 is less than the acting force of the high-pressure gas-fire flow, which easily makes the probability of connection failure between the connecting part 231 and the enclosing shell U-shaped enclosing shell 21 greater than the probability of directional pressure relief through the rupture of the pressure relief part 2111, and thus easily leads to the failure of directional pressure relief of the pressure relief part 2111.

Similarly, the battery set 20 is connected to the case 10 through the adhesive layer 12. When a thermal runaway occurs in the battery set 20, the acting force generated by the high-pressure gas-fire flow will cause the U-shaped enclosing shell 21 to have a tendency to be separated from the adhesive layer 12, and when the adhesive force corresponding to the adhesive strength of the adhesive layer 12 is smaller than the acting force, the U-shaped enclosing shell 21 will separate from the adhesive layer 12, which will also lead to the failure of directional pressure relief of the pressure relief part 2111.

Based on this, in the present application, the shear strength of the connecting part 231 is made to be greater than or equal to a first preset value, where the first preset value is greater than or equal to 0.1 Mpa, and the adhesive strength of the adhesive layer 12 is made to be greater than a second preset value, where the second preset value is greater than or equal to 1 Mpa, such that the connection strength between the connecting part 231 and the enclosing shell U-shaped enclosing shell 21 and the shear strength of the connecting part 231 itself can both be greater than the structural strength of the pressure relief part 2111. Meanwhile, the adhesive force generated corresponding to the adhesive strength of the adhesive layer 12 can be greater than the acting force of the U-shaped enclosing shell 21 when a thermal runaway occurs in the battery set 20, so as to ensure the connection stability between the connecting part 231 and the enclosing shell U-shaped enclosing shell 21, and the connection stability between the U-shaped enclosing shell 21 and the case 10 when directional pressure relief is performed through the pressure relief part 2111, and reduce the probability of connection failure between the connecting part 231 and the enclosing shell U-shaped enclosing shell 21, and the connection failure between the case 10 and the battery set 20, thereby improving the reliability and stability of directional pressure relief.

It should be noted that the U-shaped enclosing shell 21 may be packaged with the pouch battery cells 22 disposed therein and the busbar supports 23 located at both ends thereof, and after packaging, at least one side surface of the U-shaped enclosing shell 21 is adhered and fixed with the case 10 through the adhesive layer 12. When a thermal runaway occurs in the battery set 20, the high-pressure gas-fire flow caused by the thermal runaway pushes the U-shaped enclosing shell 21 to generate an acting force to be separated from the adhesive layer 12, and therefore the adhesive strength of the adhesive layer 12 needs to be not less than 1 Mpa, such that the adhesive force provided by the adhesive layer 12 is greater than the thermal runaway acting force borne by the U-shaped covering shell 21. Similarly, the connecting part 231 is connected to the U-shaped enclosing shell 21, the acting force it bears from the high-pressure gas- fire flow is mainly characterized as a shear force that causes the connecting part 231 to undergo shear deformation, and therefore the shear strength of the connecting part 231 needs to be not less than 0.1 Mpa.

The internal environment of the case 10 may be simulated, that is, one simulated case 10 is disposed, one battery set 20 is disposed in the simulated case, thermal runaway (for example, triggered by short circuit between adjacent pouch battery cells 22) is induced to occur in the battery set 20, and then the connecting parts 231 with different shear strengths are selected, such that the first preset value is obtained through multiple tests; or then the adhesive layers 12 with different adhesive strengths are selected to connect the battery set 20 and the case 10, such that the second preset value is obtained through multiple tests. Certainly, the first preset value and the second preset value may be obtained through simulation analysis or by measuring local forces after arranging a pressure gauge and a tension meter, and further performing conversion.

In the battery apparatus 100 according to the embodiments of the present application, by making the connection strength between the connecting part 231 and the enclosing shell 21 greater than the structural strength of the pressure relief part 2111, the shear strength of the connecting part 231 greater than the first preset value, and the adhesive strength of the adhesive layer 12 greater than the second preset value, when a thermal runaway occurs in the battery set 20, the pressure relief part 2111 can be preferentially ruptured for directional pressure relief, and during the directional pressure relief process, the probabilities of connection failure between the connecting part 231 and the enclosing shell U-shaped enclosing shell 21 and between the U-shaped enclosing shell 21 and the adhesive layer 12 are lower, so as to improve the reliability and stability of the directional pressure relief, thereby improving the reliability of the battery apparatus 100.

Referring to FIGs. 3, 6 and 9, according to some embodiments of the present application, the enclosing shell U-shaped enclosing shell 21 includes: a first plate 211 with a pressure relief part 2111 formed thereon and second plates 212 located on both sides of the first plate 211. The busbar member busbar supports 23 are located at both ends of the length of the enclosing shell U-shaped enclosing shell 21, and the connecting part 231 is connected to the first plate 211 and/or the second plates 212.

Specifically, the first plate 211 is located at top ends of a plurality of pouch battery cells 22 and covers the pouch battery cells 22 at their top ends, pressure relief parts 2111 are formed on at least a circumferential surface 2212 at the top ends of the pouch battery cells 22, and the pressure relief part 2111 and the pressure relief part 2111 are disposed in a corresponding manner to achieve directional pressure relief. The busbar member busbar supports 23 are disposed at both ends of the length of the enclosing shell U-shaped enclosing shell 21 (both ends of the length of the pouch battery cells 22), the busbar member busbar supports 23 may be connected to the first plate 211, the busbar member busbar supports 23 may be connected to the second plates 212, or the busbar member busbar supports 23 may be connected to both the first plate 211 and the second plates 212.

As such, by connecting the connecting part 231 to at least one of the first plate 211 and the second plates 212, the connection strength between the busbar member busbar supports 23 and the enclosing shell U-shaped enclosing shell 21 is improved, thereby improving the stability of directional pressure relief and the reliability of the battery apparatus 100.

It may be understood that in the embodiments of the present application, the connecting part 231 and the first plate 211 and/or the second plates 212 may be configured to be stably and reliably connected in various connection forms such as an insertion fit, a welding fit or a snap fit. The connection structure of the connecting part 231 and the first plate 211 and/or the second plates 212 of the present application is specifically described below in three specific embodiments in conjunction with FIGs. 3, 4, and 5, and the three specific embodiments described below are only exemplary illustrations for facilitating the understanding of the technical solutions of the present application by those skilled in the art, rather than an exhaustive list of possible embodiments of the present application.

### First embodiment:

As shown in FIGs. 3, 4, and 5, in the first embodiment, the connecting part 231 includes a fitting post, and the connecting part 231 is inserted into an insertion slot formed on the first plate 211 and/or the second plates 212.

Specifically, an end part of the first plate 211 and/or the second plates 212 is provided with an insertion slot, and the connecting part 231 includes a fitting post, or the connecting part 231 includes an insertion slot, and the first plate 211 and/or the second plates 212 is provided with a fitting post. The fitting post is inserted into the insertion slot.

Therefore, the busbar member busbar supports 23 and the enclosing shell U-shaped enclosing shell 21 can be in an insertion fit to realize fastening, which may reduce the assembly difficulty and improve the assembly efficiency while improving the connection strength.

Further, a size of an orthographic projection of the fitting post facing the insertion slot is greater than a size of an opening of the insertion slot, such that the fitting post is in an interference fit with the insertion slot.

In the embodiments in which both the first plate 211 and the second plates 212 are connected to the connecting part 231, the insertion slot may be an L-shaped insertion slot, and in the embodiments in which the first plate 211 or the second plates 212 is connected to the connecting part 231, the insertion slot may include a straight insertion slot. The opening size of the insertion slot is L1, the thickness size of the end part or the fitting post of the first plate 211 and/or the second plates 212 fitted to the insertion slot is L2, and L1 is greater than L2, such that the connecting part 231 and the first plate 211 and/or the second plates 212 are configured to be in an interference fit, which improves the connection strength between the connecting part 231 and the enclosing shell U-shaped enclosing shell 21, thereby improving the stability of directional pressure relief and improving the reliability of the battery apparatus 100.

It should be noted that the statement that the size of the projection of the fitting post facing the insertion slot is smaller than the size of the opening of the insertion slot to realize an interference fit means that in the embodiments in which the fitting post is circular, the insertion slot is also circular, and the diameter of the insertion slot is smaller than the diameter of the fitting post, and in the embodiments in which the fitting post is square, the slot is also square, and at least one of the length size and the width size of the fitting post is greater than the length size and the width size of the fitting post.

According to some embodiments of the present application, the size of the projection of the fitting post facing the insertion slot is greater than the size of the opening by 0.2-1 mm.

| The projection size is greater than the opening size by | Shear strength of the connecting part |
|---|---|
| 0.1 mm | The lower limit of the strength may be 0 within the tolerance |
| 0.2 mm | 0.13-0.19 Mpa |
| 0.5 mm | 0.23-0.31 Mpa |
| 1 mm | 0.35-0.5 Mpa |
| 1.2 mm | It is prone to causing the material to crack |

That is, in the first embodiment, by making the size of the interference fit between the fitting post and the insertion slot not less than 0.2 mm, the connection reliability and stability between the fitting post and the insertion slot can be improved, thus avoiding the insufficient connection strength between the busbar member busbar supports 23 and the enclosing shell U-shaped enclosing shell 21 due to the interference amount being within the tolerance range. Moreover, by making the size of the interference fit between the fitting post and the insertion slot not more than 1 mm, the assembly difficulty can be reduced, and the probability of structural damage to the fitting post during the assembly process can be reduced, thereby prolonging the service life of the busbar member busbar supports 23.

### Second embodiment:

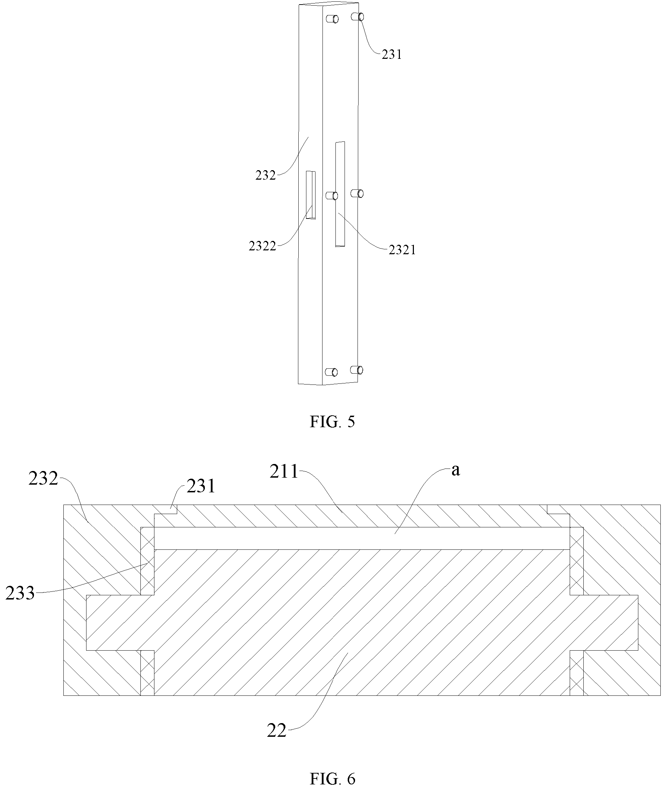

As shown in FIGs. 6, 7 and 8, in the second embodiment, the connecting part 231 includes an overlap plate. The overlap plate is connected to the first plate 211 and/or the second plates 212.

Specifically, in the embodiment in which the connecting part 231 includes an overlap plate, the connecting part 231 may be fixedly connected to the first plate 211 and/or the second plates 212 in one of or a combination of screw connection, adhesive connection, or welding connection, which may also improve the connection strength between the connecting part 231 and the enclosing shell U-shaped enclosing shell 21, thereby improving the stability of directional pressure relief and improving the reliability of the battery apparatus 100.

It may be understood that the connecting part 231 may be configured as a metal member, and the connecting part 231 may be made of the same material as the first plate 211 and the second plates 212, such that the welding difficulty of the connecting part 231 to the first plate 211 or the second plates 212 is lower, the welding strength is higher, and the sealing effect after welding is better.

According to some embodiments of the present application, an overlap size between the overlap plate and the first plate 211 and/or the second plates 212 is 1-5 mm.

| Overlap size | Shear strength of the connecting part |
|---|---|
| 0.5 mm | There is false welding at the lower limit of the tolerance |
| 1 mm | 0.11-0.16 Mpa |
| 3 mm | 0.20-0.28 Mpa |
| 5 mm | 0.32-0.4 Mpa |
| 6 mm | The large length leads to the encroachment on the space of the battery set |

That is, in the second embodiment, by making the overlap size not less than 1 mm, the connection strength between the connecting part 231 and the enclosing shell U-shaped enclosing shell 21 may be improved, the probability of false welding, poor welding, and insufficient adhesive strength is reduced. Moreover, by making the overlap size not greater than 5 mm, and on the premise of ensuring the connection strength, the space occupation of the connecting part 231 may also be reduced, so as to take the energy density of the battery set 20 into consideration.

According to some embodiments of the present application, the overlap plate is fixed to the first plate 211 and/or the second plates 212 by adhesive connection, welding connection, or screw connection.

Specifically, end parts of the first plate 211 and the second plates 212 are in an overlap fit with the overlap plate, or overlap parts having a thickness smaller than the thickness of bodies of the first plate 211 and the second plates 212 themselves are formed on end parts of the first plate 211 and the second plates 212, and the overlap parts are in an overlap fit with the overlap plate, such that the outer surface of the battery set 20 is flatter.

The region of the overlap plate that is in an overlap fit with the first plate 211 and the second plates 212 may be provided with a structural adhesive to realize the fixing between the connecting part 231 and the enclosing shell U-shaped enclosing shell 21 by adhesive connection, or the region may be fixed by welding connection or screw connection, such that the connection strength between the enclosing shell U-shaped enclosing shell 21 and the busbar member busbar supports 23 is effectively improved.

It should be noted that in the embodiment in which the overlap plate is fixed to the first plate 211 and the second plates 212 by screw connection, the overlap plate or the first plate 211 and the second plates 212 may be provided with threaded holes. Fasteners used for threaded fastening are configured as countersunk screws or countersunk studs to make the outer surface of the second plates 212 flatter.

### Third embodiment:

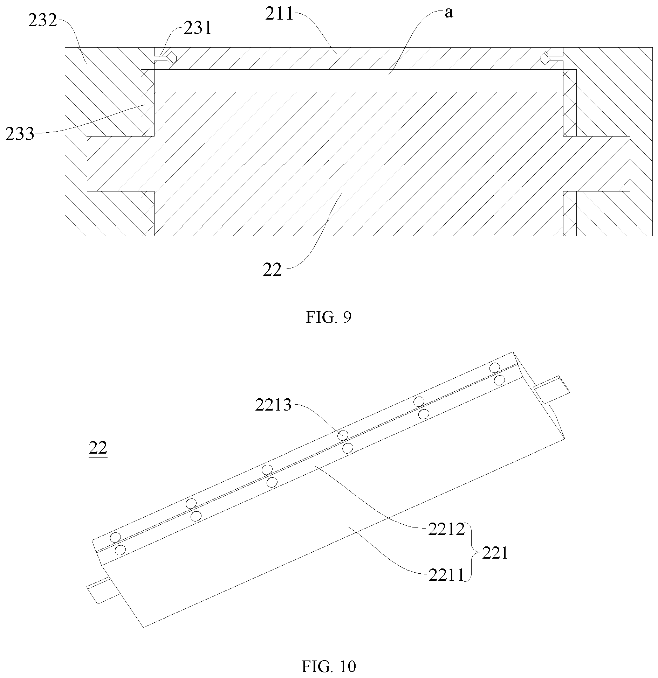

As shown in FIG. 9, in a third embodiment, according to some embodiments of the present application, the connecting part 231 is configured as a first snap structure, and a second snap structure in a snap fit with the first snap structure is formed on an end part of the length of the first plate 211 and/or the second plates 212.

Specifically, the first snap structure may be configured as a snap or a slot, and the corresponding second snap structure may be configured as a slot or a snap, so as to fix the busbar member busbar supports 23 to the enclosing shell U-shaped enclosing shell 21 through the snap fit between the first snap structure and the second snap structure, and achieve the same technical effects as those of the first embodiment and the second embodiment, which is not repeated herein.

According to some embodiments of the present application, each of the busbar member busbar supports 23 further includes: an insulating body 232 and a sealing part 233. The sealing part 233 is located between the insulating body 232 and the pouch battery cells 22, the connecting part 231 is connected to the insulating body 232, and the connecting part 231 is located on an edge of the insulating body 232 on at least one side. A first groove 2321 and a second groove 2322 are formed in the insulating body 232, the first groove 2321 is located on a surface of the insulating body 232 on a side facing the pouch battery cells 22, the second groove 2322 is located on a surface of the insulating body 232 on an adjacent side and penetrates through the insulating body 232, and the first groove 2321 is in communication with the second groove 2322. The first groove 2321 is suitable for accommodating a tab, and the second groove 2322 is suitable for accommodating a busbar conductor electrically connected to the tab.

Specifically, the insulating body 232 may be configured as an insulating structure such as a plastic member or a rubber member, the connecting part 231 may be integrally formed with the insulating body 232, or the connecting part 231 may be configured as a metal insert and embedded in the insulating body 232, such that the connection strength and reliability between the busbar member busbar supports 23 and the enclosing shell U-shaped enclosing shell 21 are improved by the connecting part 231 configured as a metal insert. Meanwhile, by spacing the connecting part 231 apart from the tab, the busbar conductor, and the like by the insulating body 232, the probability of a short circuit of the battery set 20 may be reduced, thereby improving the reliability of the battery set 20.

Meanwhile, by disposing the sealing part 233 before the insulating body 232 and the enclosing shell U-shaped enclosing shell 21 and the pouch battery cells 22, the sealing performance of the battery set 20 may be improved, thereby improving the reliability and stability of the battery set 20. The setting of the first groove 2321 and the second groove 2322 on the insulating body 232 may reduce the difficulty of the electrical connection between the busbar conductor and the tab, and reduce the difficulty of the electrical connection between a plurality of pouch battery cells 22, and between adjacent battery sets 20.

It should be noted that when a thermal runaway occurs in a single pouch battery cell 22, high-temperature and high-pressure gas is generated inside the pouch battery cell 22, which will entrain a certain amount of solid particles, liquids, etc., to form a high-temperature gas-fire flow. The temperature and pressure of the high-temperature gas-fire flow generated by the pouch battery cell 22 have a strong correlation with the energy density of the pouch battery cell 22, that is, the greater the energy density, the greater the acting force acting on the connection region between the enclosing shell U-shaped enclosing shell 21 and the busbar member busbar supports 23, and the higher the requirements on the connection strength of the connection region between the enclosing shell U-shaped enclosing shell 21 and the busbar member busbar supports 23, the shear strength of the connecting part 231 itself, and the adhesive strength of the adhesive layer 12.

Based on this, the energy density of the pouch battery cell 22, the shear strength of the connecting part 231, the connection strength between the enclosing shell 21, and the adhesive strength of the adhesive layer 12 are defined by the present application as follows:
1. When the energy density of the pouch battery cells 22 is 450-600 Wh/L, the connection strength between the connecting part 231 and the enclosing shell U-shaped enclosing shell 21 is 0.1-0.2 Mpa, the shear strength of the connecting part 231 is 0.1-0.2 Mpa, and the adhesive strength of the adhesive layer 12 is 1-2.5 Mpa.
2. When the energy density of the pouch battery cells 22 is 600-700 Wh/L, the shear connection strength between the connecting part 231 and the enclosing shell 21 is 0.2-0.3 Mpa, and the adhesive strength of the adhesive layer 12 is 2.5-5.5 Mpa.
3. When the energy density of the pouch battery cells 22 is greater than 700 Wh/L, the shear strength of the connection between the connecting part 231 and the enclosing shell 21 is 0.3-0.5 Mpa, and the adhesive strength of the adhesive layer 12 is 5.5-10.5 Mpa.

Specifically, when the energy density of the pouch battery cells 22 is less than 450 Wh/L, the pressure acting on the connection region between the connecting part 231 and the enclosing shell U-shaped enclosing shell 21 is relatively low when a thermal runaway occurs, the shear force borne by the connecting part 231 is relatively low, the peeling force borne by the adhesive layer 12 is relatively low, and the shear strength of the connection between the conventional connecting part 231 and the enclosing shell 21 and the adhesive force of the conventional adhesive layer 12 can meet the pressure-bearing requirements for directional pressure relief, so the present application does not further limit them. However, when the energy density of the pouch battery cells 22 is greater than or equal to 450 Wh/L and less than 600 Wh/L, the pressure acting on the connection region between the connecting part 231 and the enclosing shell U-shaped enclosing shell 21 when a thermal runaway occurs is increased, correspondingly, the shear force borne by the connecting part 231 and the peeling force borne by the adhesive layer 12 are also increased, and at this time, the shear connection strength between the conventional connecting part 231 and the enclosing shell 21, and the adhesive force provided by the conventional adhesive layer 12 cannot meet the pressure-bearing requirements for directional pressure relief, and it is sufficient that the shear strength of the connection between the connecting part 231 and the enclosing shell 21 is greater than 0.1 Mpa and less than or equal to 0.2 Mpa, and the adhesive strength of the adhesive layer 12 is greater than 1 Mpa and less than or equal to 2.5 Mpa. Moreover, when the energy density of the pouch battery cells 22 is greater than or equal to 600 Wh/L and less than 700 Wh/L, the pressure acting on the connection region between the connecting part 231 and the enclosing shell U-shaped enclosing shell 21 when a thermal runaway occurs is increased again, the shear force borne by the connecting part 231 and the peeling force borne by the adhesive layer 12 are also increased again, and at this time, the shear strength of the conventional connecting part 231 and the adhesive force provided by the conventional adhesive layer 12 cannot meet the pressure-bearing requirements for directional pressure relief, and it is sufficient that the shear strength of the connection between the connecting part 231 and the enclosing shell 21 is greater than 0.2 Mpa and less than or equal to 0.3 Mpa, and the adhesive strength of the adhesive layer 12 is greater than 2.5 Mpa and less than or equal to 5.5 Mpa. Furthermore, when the energy density of the pouch battery cells 22 is greater than or equal to 700 Wh/L, the pressure acting on the connection area between the connecting part 231 and the enclosing shell U-shaped enclosing shell 21 when a thermal runaway occurs is further increased, the shear force borne by the connecting part 231 and the peeling force borne by the adhesive layer 12 are also further increased, and at this time, the shear strength of the conventional connecting part 231 and the adhesive force provided by the conventional adhesive layer 12 cannot meet the pressure-bearing requirements for directional pressure relief, and it is sufficient that the shear strength of the connection between the connecting part 231 and the enclosing shell 21 is greater than 0.3 Mpa and less than or equal to 0.5 Mpa, and the adhesive strength of the adhesive layer 12 is greater than 5.5 Mpa and less than or equal to 10.5 Mpa.

Therefore, based on the energy density, the shear connection strength between the connecting part 231 and the enclosing shell 21 may be reasonably set, which may avoid the situation where the connection strength between the connecting part 231 and the enclosing shell 21 is too low, and reduce the probability of the failure of the connecting part 231, so as to ensure that the connection strength between the connecting part 231 and the U-shaped enclosing shell 21 may meet the requirements for directional pressure relief, and can also avoid the situation where the connection strength is too high, so as to avoid the structural redundancy, thereby reducing costs. Meanwhile, by reasonably setting the adhesive strength of the adhesive layer 12, the probability of connection failure between the battery set 20 and the case 10, especially the connection failure between the U-shaped enclosing shell 21 and the case 10, may be reduced, so as to meet the requirements for directional pressure relief.

It should be noted that both the shear strength of the connecting part 231 and the adhesive strength of the adhesive layer 12 may be measured by simulating the internal environment of the case 10 and performing an inflation test. That is, a test sample with the same material and thickness as the U-shaped enclosing shell 21 is selected and connected to the busbar support 23 to form a closed space, then the closed space is inflated, the pressure inside the closed space is recorded when the connecting part 231 is disengaged from the U-shaped enclosing shell 21 or when the adhesive layer 12 is disengaged from the U-shaped enclosing shell 21, and the adhesive strength of the adhesive layer 12 and the shear strength of the connecting part 231 of the busbar support 23 are calculated through the pressure conversion. Certainly, the connection strength and shear strength between the connecting part 231 and the enclosing shell 21, and the adhesive strength of the adhesive layer 12 may also be measured through other destructive tests. For example, when the connecting part 231 is fixed to the enclosing shell U-shaped enclosing shell 21 by adhesive connection, welding connection, screw connection, or snap connection, a tensile test may be used. In the embodiments in which the connecting part 231 is fixed to the enclosing shell U-shaped enclosing shell 21 by adhesive connection or welding connection, a shear test may also be used to measure the connection shear strength. Similarly, the adhesive strength between the adhesive layer 12 and the U-shaped enclosing shell 21 may also be obtained through a tensile test.

Illustratively, for a specific product of the pouch battery cell 22 with a length of 355 mm, a height of 123 mm, and a width of 13.8 mm, the comparison table of the thermal runaway temperature, internal pressure, and adhesive strength of the adhesive layer under different energy densities is as follows:

| Energy density (Wh/L) | Temperature of thermal runaway gas (°C) | Internal pressure (Mpa) | Adhesive strength (Mpa) |
|---|---|---|---|
| 450 | 400 | 0.109 | 0.85 |
| 600 | 800 | 0.205 | 2.495 |
| 700 | 1100 | 0.299 | 5.498 |
| 760 | 1400 | 0.305 | 5.506 |

As shown in the above table, for the pouch battery cell 22 in the embodiments of the present application, when the energy density is in the range of 450-600 Wh/L (greater than or equal to 450 Wh/L and less than 600 Wh/L), the shear connection strength is in the range of 0.1-0.2 Mpa (greater than or equal to 0.1 Mpa and less than 0.2 Mpa), and the adhesive strength is in the range of 1-2.5 Mpa (greater than or equal to 1 Mpa and less than 2.5 Mpa). Moreover, when the energy density is in the range of 600-700 Wh/L (greater than or equal to 600 Wh/L and less than or equal to 700 Wh/L), the shear connection strength is in the range of 0.2-0.3 Mpa (greater than or equal to 0.12 Mpa and less than 0.3 Mpa), and in the range of 2.5-5.5 Mpa (greater than or equal to 2.5 Mpa and less than 5.5 Mpa). Furthermore, when the energy density is above 700 Wh/L (greater than 700 Wh/L), the shear connection strength is in the range of 0.3-0.5 Mpa (greater than or equal to 0.3 Mpa and less than 0.5 Mpa), and the adhesive strength is in the range of 2.5-10.5 Mpa (greater than or equal to 2.5 Mpa and less than 10.5 Mpa). The shear connection strength may be higher than the internal pressure, and the adhesive force corresponding to the adhesive strength may be greater than the peeling force, so as to ensure the connection reliability and stability between the connecting part 231 and the enclosing shell U-shaped enclosing shell 21, and between the battery set 20 and the case 10.

As shown in FIG. 2, the battery apparatus 100 includes: a case 10 and a battery set 20. At least one battery set 20 is provided. The battery set 20 includes: at least one pouch battery cell 22 in the embodiments described above and the enclosing shell U-shaped enclosing shell 21. The surface of the enclosing shell U-shaped enclosing shell 21 on at least one side is provided with a weak part 2113.

An accommodating space is formed in the case 10, one or more battery sets 20 are disposed in the accommodating space, one or more pouch battery cells 22 are disposed in the enclosing shell U-shaped enclosing shell 21 of each of the battery sets 20, and the pouch battery cells 22 are constructed as the pouch battery cells 22 adopting the flexible outer shell 221 described above.

The enclosing shell U-shaped enclosing shell 21 is at least used to enclose at least one of a plurality of circumferential surfaces 2212 and two side surfaces 2211 of the pouch battery cell 22. The weak part 2213 is disposed on at least one of the circumferential surfaces 2212 of each of the pouch battery cells 22. The pressure relief part 2111 is formed on the surface (e.g., the first plate 211) of the enclosing shell U-shaped enclosing shell 21 on at least one side. For example, the pressure relief part 2111 is opposite to the weak part 2213, or the pressure relief part 2111 is located on a first surface of the enclosing shell U-shaped enclosing shell 21, while the weak part 2213 is opposite to a second surface of the enclosing shell U-shaped enclosing shell 21, and the first surface is adjacent to the second surface.

Therefore, by disposing the pressure relief part 2111 cooperating with the weak part 2113 on the enclosing shell U-shaped enclosing shell 21, when a thermal runaway occurs in the pouch battery cells 22, the high-temperature gas-fire flow discharged through the pressure relief region (the weak part 2213) may be further released outwards through the pressure relief part 2111, such that through the cooperation between the weak part 2213 and the pressure relief part 2111, directional discharge of the high-temperature gas-fire flow is realized, thereby improving the reliability of the battery apparatus 100.

According to some embodiments of the present application, the enclosing shell U-shaped enclosing shell 21 includes a first plate 211 and second plates 212 located on both sides of the first plate 211. The pressure relief part 2111 is formed on the first plate 211, and the weak part 2113 is at least partially opposite to the pressure relief part 2111.

Specifically, the first plate 211 and the second plates 212 located on both sides of the first plate 211 define the enclosing shell U-shaped enclosing shell 21 that is substantially U-shaped, such that the first plate 211 of the enclosing shell U-shaped enclosing shell 21 may be opposite to one circumferential surface 2212 of each of the pouch battery cells 22, and the two second plates 212 may be opposite to two side surfaces 2211 of each of the pouch battery cells 22, respectively. The weak part 2213 formed on the circumferential surface 2212 may be at least partially opposite to the pressure relief part 2111 formed on the first plate 211.

It should be noted that the statement that the weak part 2113 is at least partially opposite to the pressure relief part 2111 means that the weak part 2213 formed on the circumferential surface 2212 is projected towards the first plate 211, and the projected contour at least partially overlaps with the contour of the pressure relief part 2111.

As such, in one aspect, the gas-fire flow generated after the thermal runaway of the pouch battery cell 22 may be discharged directionally, so as to realize orderly discharge, thereby reducing the damage, especially the secondary damage. In another aspect, the communication path between the pressure relief region and the pressure relief part 2111 is shorter, such that the time for the gas-fire flow to retain inside the enclosing shell U-shaped enclosing shell 21 is shorter while the rapid discharge is realized, which has a smaller influence on other pouch battery cells 22 around the pouch battery cell 22 experiencing the thermal runaway, and may further reduce the propagation speed of the thermal runaway, thereby improving the reliability of the battery set 20 and the battery apparatus 100.

According to some embodiments of the present application, the second plate 212 is opposite to the side surface 2211, and the area of the projected contour of the second plate 212 facing the side surface 2211 of the flexible outer shell 221 is less than or equal to the area of the side surface 2211.

Specifically, it is defined that the circumferential surface 2212 includes a first surface and a second surface opposite thereto. The first surface is opposite to the first plate 211, the second surface is disposed away from the first plate 211, and the second surface is connected to the case 10. Both sides of the first surface and the second surface are two side surfaces 2211 of the pouch battery cell 22, respectively, and both ends of the first surface and the second surface are the other two circumferential surfaces 2212 of the pouch battery cell 22, respectively. The second plate 212 is opposite to the side surface 2211 to limit the position of the pouch battery cell 22 in the direction where the second plate 212 is located. The area size of the surface of the second plate 212 opposite to the side surface 2211 may be less than or equal to the area size of the side surface 2211.

That is, in some embodiments, the size of the second plate 212 is the same as the size of the side surface 2211, and in some other embodiments, the size of the second plate 212 is smaller than the size of the side surface 2211. In another aspect, this may avoid the situation where the size of the second plate 212 is too large to allow the second surface to connect to the case 10, such that the fixing stability and reliability of the battery set 20 in the case 10 may be improved. In another aspect, fewer materials may be needed for the second plate 212, which may also reduce the material costs of the battery set 20 and the battery apparatus 100.

As shown in FIGs. 3, 6, and 9, according to some embodiments of the present application, the first plate 211 is spaced apart from the side of the circumferential surface 2212 provided with the weak part 2213 to define an exhaust channel a.

In this way, the high-temperature gas and fire flow generated after the weak part 2213 breaks may be released into the exhaust channel a first, and then after the preliminarily buffered by the exhaust channel a, the flow is discharged through the pressure relief part 2111, which can reduce the pressure after the high-temperature gas and fire flow flows out of the pressure relief part 2111, thus reducing the impact and damage caused by the thermal runaway in the pouch battery cells 22.

According to some embodiments of the present application, the first plate 211 is configured as a flat plate or an arc-shaped plate.

That is, in some embodiments, the first plate 211 is configured as a flat plate, and in some other embodiments, the first plate 211 is configured as an arc-shaped plate.

According to some embodiments of the present application, a plurality of the pressure relief parts 2111 are provided. The plurality of pressure relief parts 2111 are spaced apart from each other in the length direction and/or the width direction of the first plate 211.

Therefore, the plurality of weak parts 2213 on each pouch battery cell 22 may be provided with the corresponding pressure relief parts 2111, such that the high-temperature gas-fire flow buffered by the exhaust channel a may be directly discharged through the corresponding pressure relief parts 2111, which increases the discharge speed and reduces the retention time of the high-temperature gas-fire flow in the exhaust channel a during the discharge process, so as to reduce the propagation speed of thermal runaway between adjacent pouch battery cells 22 in the battery set 20, thereby improving the reliability of the battery set 20.

According to some embodiments of the present application, the enclosing shell U-shaped enclosing shell 21 is constructed as an aluminum shell or a stainless steel shell.

It may be understood that in some embodiments, the enclosing shell U-shaped enclosing shell 21 is configured as an aluminum shell, and in some other embodiments, the enclosing shell U-shaped enclosing shell 21 is configured as a stainless steel shell, such that the temperature resistance, the structural strength, and the like of the enclosing shell U-shaped enclosing shell 21 are much higher than those of the flexible shell, so as to provide support and protection for the pouch battery cells 22 outside the pouch battery cells 22 by the enclosing shell U-shaped enclosing shell 21 with a certain structural strength and rigidity, which may improve the structural strength of the battery set 20 and reduce the propagation speed of thermal runaway between adjacent battery sets 20, thereby improving the reliability of the battery apparatus 100.

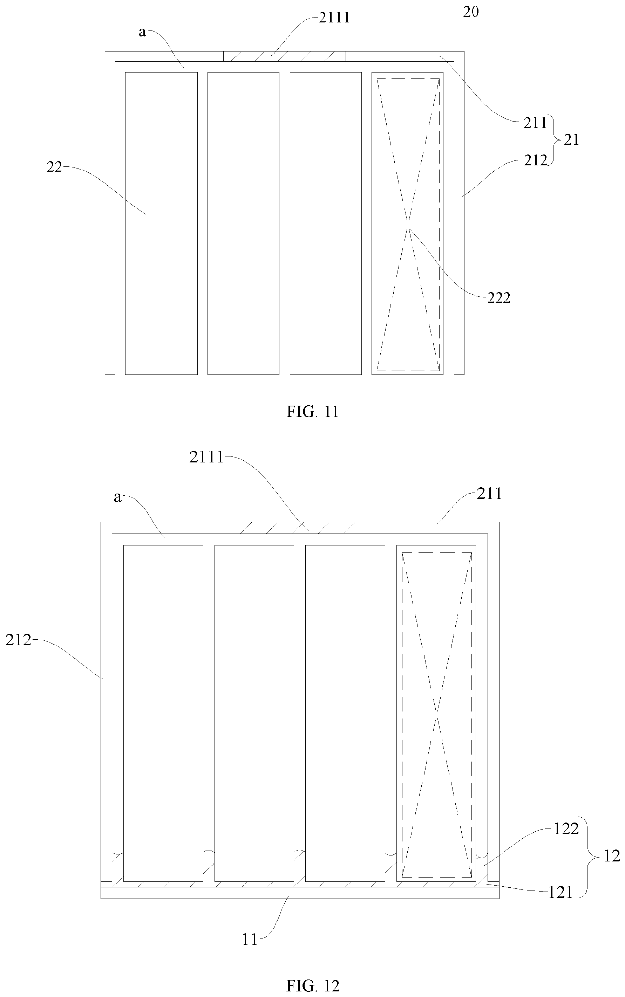

Referring to FIG. 12, according to some embodiments of the present application, the case 10 is provided with a bottom plate 11. The bottom plate 11 is connected to each of the pouch battery cells 22 through the adhesive layer 12.

Specifically, the bottom plate 11 of the case 10 is connected to the second surface of the pouch battery cell 22 through the adhesive layer 12, so as to fix the battery set 20 on the case 10, thereby improving the fixing stability and reliability of the battery set 20.

Certainly, in some embodiments, the adhesive layer 12 is also used for the connection and fixation between the bottom plate 11 and the second plates 212.

Referring to FIG. 12, according to some embodiments of the present application, the bottom plate 11 includes a cold plate. The adhesive layer 12 is located between the cold plate and the plurality of pouch battery cells 22.

In some embodiments, the bottom plate 11 of the case 10 is formed as a cold plate, and the cold plate is connected to the pouch battery cell 22 through the adhesive layer 12. In some other embodiments, a cold plate is disposed between the bottom plate 11 and the pouch battery cell 22, and the cold plate is connected to the pouch battery cell 22 through the adhesive layer 12.

That is, the adhesive layer 12 is configured as a structural adhesive, and the bottom plate 11 provided with the cold plate is connected to the pouch battery cell 22, such that on the premise that the battery set 20 is stably and reliably fixed in the case 10, the temperature of the battery set 20 can be adjusted by the cold plate, which can enable the battery set 20 to operate at a proper temperature, improve the working stability and reliability of the battery set 20, and reduce the probability of overheating of the battery set 20, so as to reduce the probability of thermal runaway of the battery set 20, thereby improving the reliability of the battery set 20 and even the battery apparatus 100.

As shown in FIG. 12, according to some embodiments of the present application, the adhesive layer 12 includes: an adhesive layer body 121 and an adhesive overflow part 122. The adhesive overflow part 122 is located on a side of the adhesive layer body 121 facing the plurality of pouch battery cells 22, and is located between adjacent pouch battery cells 22 and/or between the pouch battery cells 22 and the second plates 212.

That is, when the structural adhesive is used for the connection and fixation of the pouch battery cells 22 to the cold plate, at least a part of the adhesive layer 12 overflows to the space between adjacent pouch battery cells 22 and/or between the second plates 212 and the pouch battery cells 22, and is formed as the adhesive overflow part 122. By disposing the adhesive overflow part 122, not only may the contact areas between the adhesive layer 12 and the pouch battery cells 22, and between the adhesive layer 12 and the second plates 212 be increased to improve the fixing stability and reliability of the battery set 20 on the case 10, but also the gaps between adjacent pouch battery cells 22, and between the pouch battery cells 22 and the second plates 212 may be filled with the adhesive overflow part 122 to limit the position of the pouch battery cells 22 and the enclosing shell U-shaped enclosing shell 21, thereby reducing the movement of the battery set 20 within the case 10 and the movement of the pouch battery cells 22 within the enclosing shell U-shaped enclosing shell 21.

According to some embodiments of the present application, each of the pouch battery cells 22 is any one of a lithium iron phosphate battery cell, a ternary lithium battery cell, and a solid-state battery cell.

That is, in some embodiments, the pouch battery cell 22 is configured as a lithium iron phosphate battery, in some embodiments, the pouch battery cell 22 is configured as a ternary lithium battery cell, and in some embodiments, the pouch battery cell 22 is configured as a solid-state battery cell.

The solid-state battery cell may be, but not limited to, a polymer solid-state battery cell, an oxide solid-state battery cell, a sulfide solid-state battery cell, a halide solid-state battery cell, and the like. The solid-state battery cell may also be a semisolid-state battery cell or an all-solid-state battery cell.

In the technical solutions described above, in the embodiments in which the present application is configured as a lithium iron phosphate battery cell, the reliability of the pouch battery cell may be improved, and the cycle life of the pouch battery cell may be prolonged. In the embodiments in which the present application is configured as a ternary lithium battery cell, the energy density of the pouch battery cell may be improved, and the endurance mileage may be extended. In the embodiments in which the present application is configured as a solid-state pouch battery cell, not only may the energy density be improved, but also the reliability may be improved.

According to some embodiments of the present application, when each of the pouch battery cells 22 is the lithium iron phosphate (LiFeO₄) battery cell, in a positive electrode material of each of the pouch battery cells 22, a usage ratio of the positive electrode active material, the positive electrode binder, and the positive electrode conductive agent is 96:1-3:1-3. When each of the pouch battery cells 22 is the ternary lithium battery, in a positive electrode material of each of the pouch battery cells 22, a usage ratio of the positive electrode active material, the positive electrode binder, and the positive electrode conductive agent is 96:2-3:1-2.

It may be understood that when each of the pouch battery cells 22 is the lithium iron phosphate battery cell, in the positive electrode material of each of the pouch battery cells 22, the positive electrode active material accounts for 96 parts of the total weight of the positive electrode material, the binder accounts for 1-3 (for example, it may include, but is not limited to, 1, 1.2, 1.5, 1.8, 2, 2.2, 2.5, 2.8, 3, etc.) parts of the total weight of the positive electrode material, and the conductive agent accounts for 1-3 (for example, it may be, but is not limited to, 1, 1.2, 1.5, 1.8, 2, 2.2, 2.5, 2.8, 3, etc.) parts of the total weight of the positive electrode material.

Illustratively, when each of the pouch battery cells 22 is the lithium iron phosphate battery cell, the positive electrode active material is LFP (this may refer to LiFePO₄, i.e., lithium iron phosphate), the binder may be PVDF (polyvinylidene fluoride), and the conductive agent may be conductive carbon black. The ratio of LFP:PVDF:conductive carbon black may be 96:2:2; that is, the total weight of the positive electrode active material is divided into 100 parts, in which LFP accounts for 96 parts, PVDF accounts for 2 parts, and the conductive carbon black accounts for 2 parts. The weight unit of the positive electrode active material may be gram.

When each of the pouch battery cells 22 is the ternary battery cell, in the positive electrode material of each of the pouch battery cells 22, the positive electrode active material accounts for 96 parts of the total weight of the positive electrode material, the binder accounts for 2 to 3 parts (for example, the part may include, but is not limited to, 2, 2.2, 2.5, 2.8, and 3 parts) of the total weight of the positive electrode material, and the conductive agent accounts for 1 to 2 parts (for example, the part may include, but is not limited to, 1, 1.2, 1.5, 1.8, and 2 parts) of the total weight of the positive electrode material. The ternary battery cell may be, but is not limited to, lithium nickel cobalt manganate series, lithium nickel cobalt aluminate series, and the like.

Illustratively, the ternary material of the ternary battery cell may be eight-series LiNi_{0.8}Co_{0.1}Mn_{0.1}O₂, and the ratio of the weight parts of the positive electrode active material, the binder, and the conductive agent is 96:2.5:1.5, that is, the total weight of the positive electrode material is divided into 100 parts, in which the eight-series LiNi_{0.8}Co_{0.1}Mn_{0.1}O₂ accounts for 96 parts, the binder accounts for 2.5 parts, and the conductive agent accounts for 1.5 parts.

In the technical solutions described above, when each of the pouch battery cells 22 is the lithium iron phosphate battery cell, the high proportion of the positive electrode active material means that a greater amount of electrochemically reactive materials may be accommodated within the limited electrode assembly, which is conducive to increasing the capacity and energy density of the battery apparatus 100, such that the lithium iron phosphate battery cell can output a higher amount of electricity while maintaining relatively small volume and weight, making it suitable for application scenarios requiring a certain level of energy density. In addition, when the amounts of the binder and the conductive agent are within the aforementioned ranges, the cost of auxiliary materials can be reduced, thus reducing the overall cost of the battery apparatus 100. When each of the pouch battery cells 22 is the ternary battery cell, due to the relatively complex structure and surface properties of the ternary material, the adoption of the aforementioned ratio of the positive electrode active material, the binder, and the conductive agent ensures the firm bonding between the positive electrode active material particles and between the active material and the current collector. Therefore, this configuration improves the mechanical stability and structural integrity of the electrode assembly, and reduces the risk of the active material detachment and electrode pulverization during the charging and discharging processes, thereby extending the cycle life of the battery apparatus 100.

The present application proposes an electric device 200, including: the battery apparatus 100 in the embodiments described above.

Further, as shown in FIG. 1, the electric device 200 may be a vehicle, and the battery apparatus 100 may be integrated on the chassis of the vehicle, that is, the vehicle body is configured as a split vehicle body, the upper vehicle body is assembled with the integrated intelligent chassis, and the battery apparatus 100 is formed as a part of the integrated intelligent chassis, such that the top plate of the case 10 can participate in defining the floor of the vehicle body, thereby avoiding the meaningless multi-layer stacking of plates, reducing the material cost, enabling more reasonable use of the space of the chassis, increasing the space inside the chassis for accommodating the battery apparatus 100, and achieving higher energy density.

It may be understood that when the electric device 200 is configured as the vehicle, that is, the vehicle uses the above battery apparatus 100, the energy density of the battery apparatus 100 is higher, and the reliability is better, such that the driving safety of the vehicle may be improved while the endurance mileage of the vehicle is increased.

Other compositions and operations of the pouch battery cell 22, the battery apparatus 100, and the electric device 200 according to the embodiments of the present utility model are known to those skilled in the art and will not be described herein.

In the description of this specification, the description of reference terms "one embodiment", "some embodiments", "a schematic embodiment", "an example", "a specific example", or "some examples" and the like means that a particular feature, structure, material, or characteristic described in connection with the embodiments or examples is included in at least one embodiment or example of the present application. In the specification, the schematic description of the aforementioned terms does not necessarily refer to the same embodiment or example. Moreover, the specific feature, structure, material, or characteristic described may be combined in a suitable manner in any one or more embodiments or examples.

Although the embodiments of the present application have been illustrated and described, it may be understood by those of ordinary skill in the art that various changes, modifications, replacements, and variations may be made to these embodiments without departing from the principle and purpose of the present application, and the scope of the present application is defined by the claims and equivalents therefore.

In the description of this specification, the description of reference terms "one embodiment", "some embodiments", "a schematic embodiment", "an example", "a specific example", or "some examples" and the like means that a particular feature, structure, material, or characteristic described in connection with the embodiments or examples is included in at least one embodiment or example of the present application. In the specification, the schematic description of the aforementioned terms does not necessarily refer to the same embodiment or example. Moreover, the specific feature, structure, material, or characteristic described may be combined in a suitable manner in any one or more embodiments or examples.

Although the embodiments of the present application have been illustrated and described, it may be understood by those of ordinary skill in the art that various changes, modifications, replacements, and variations may be made to these embodiments without departing from the principle and purpose of the present application, and the scope of the present application is defined by the claims and equivalents therefore.

## Claims

1. A battery apparatus (100), comprising:
a case (10); and
a battery set (20), comprising a U-shaped enclosing shell (21), a plurality of pouch battery cells (22), and busbar supports (23), wherein the U-shaped enclosing shell (21) is connected to the case (10), the busbar supports (23) are disposed on the U-shaped enclosing shell (21) and are each connected to the U-shaped enclosing shell (21) through a connecting part (231), the U-shaped enclosing shell (21), the case (10), and the busbar supports (23) jointly form an accommodating space, and the plurality of pouch battery cells (22) are disposed in the accommodating space and electrically connected through the busbar supports (23),
wherein the U-shaped enclosing shell (21) is provided with a pressure relief part (2111), and a connection strength between the connecting part (231) and the U-shaped enclosing shell (21) is greater than a structural strength of the pressure relief part (2111).

2. The battery apparatus (100) according to claim 1, wherein the U-shaped enclosing shell (21) comprises: a first plate (211) with the pressure relief part (2111) formed thereon and second plates (212) located on both sides of the first plate (211), the busbar supports (23) are located at both ends of the length of the U-shaped enclosing shell (21), and the connecting part (231) is connected to the first plate (211) and/or the second plates (212).

3. The battery apparatus (100) according to claim 1 or 2, wherein the connecting part (231) comprises a fitting post, and the connecting part (231) is inserted into an insertion slot formed in the first plate (211) and/or the second plates (212).

4. The battery apparatus (100) according to claim 3, wherein a size of an orthographic projection of the fitting post facing the insertion slot is greater than a size of an opening of the insertion slot, such that the fitting post is in an interference fit with the insertion slot.

5. The battery apparatus (100) according to claim 4, wherein the size of the projection of the fitting post facing the insertion slot is greater than the size of the opening by 0.2-1 mm.

6. The battery apparatus (100) according to claim 1 or 2, wherein the connecting part (231) comprises an overlap plate, and the overlap plate is connected to the first plate (211) and/or the second plates (212).

7. The battery apparatus (100) according to claim 6, wherein an overlap size between the overlap plate and the first plate (211) and/or the second plates (212) is 1-5 mm.

8. The battery apparatus (100) according to claim 6, wherein the overlap plate is fixed to the first plate (211) and/or the second plates (212) by adhesive connection, welding connection, or screw connection.

9. The battery apparatus (100) according to claim 1 or 2, wherein the connecting part (231) comprises a first snap structure, and a second snap structure in a snap fit with the first snap structure is formed on an end part of the length of the first plate (211) and/or the second plates (212).

10. The battery apparatus (100) according to any one of claims 1-9, wherein each of the busbar supports (23) further comprises: an insulating body (232) and a sealing part (233), the sealing part (233) is located between the insulating body (232) and the pouch battery cells (22), the connecting part (231) is connected to the insulating body (232) and located on an edge of the insulating body (232) on at least one side, a first groove (2321) and a second groove (2322) are formed in the insulating body (232), the first groove (2321) is located on a surface of the insulating body (232) on a side facing the pouch battery cells (22), the second groove (2322) is located on a surface of the insulating body (232) on an adjacent surface and penetrates through the insulating body (232), the first groove (2321) is in communication with the second groove (2322), the first groove (2321) is suitable for accommodating a tab, and the second groove (2322) is suitable for accommodating a busbar conductor electrically connected with the tab.

11. The battery apparatus (100) according to claim 10, wherein when an energy density of the pouch battery cells (22) is 450-600 Wh/L, the connection strength between the connecting part (231) and the U-shaped enclosing shell (21) is 0.1-0.2 MPa;
when an energy density of the pouch battery cells (22) is 600-700 Wh/L, the connection strength between the connecting part (231) and the U-shaped enclosing shell (21) is 0.2-0.3 MPa;
when an energy density of the pouch battery cells (22) is greater than 700 Wh/L, the connection strength between the connecting part (231) and the U-shaped enclosing shell (21) is 0.3-0.5 MPa.

12. The battery apparatus (100) according to claim 2, wherein a plurality of the pressure relief parts (2111) are provided, and the plurality of the pressure relief parts (2111) are spaced apart from each other in the length direction and/or the width direction of the first plate (211).

13. The battery apparatus (100) according to any one of claims 2-12, wherein the first plate (211) is configured as a flat plate or an arc-shaped plate.

14. The battery apparatus (100) according to any one of claims 2-12, wherein each of the pouch battery cells (22) comprises: a flexible outer shell (221) and an electrode assembly (222) disposed within the flexible outer shell (221), the flexible outer shell (221) has a side surface (2211) opposite to a large surface of the electrode assembly (222) and a circumferential surface (2212) avoiding the large surface, and the second plate (212) is opposite to the side surface (2211).

15. The battery apparatus (100) according to claim 14, wherein an area of a projected contour of the second plate (212) facing the side surface (2211) of the flexible outer shell (221) is less than or equal to an area of the side surface (2211).

16. The battery apparatus (100) according to claim 14 or 15, wherein a weak part (2213) is formed on the circumferential surface (2212), the weak part (2213) is opposite to the first plate (211), and the pressure relief part (2111) is at least partially opposite to the weak part (2213).

17. The battery apparatus (100) according to claim 16, wherein the first plate (211) is spaced apart from a side of the circumferential surface (2212) provided with the weak part (2213) to define an exhaust channel (a).

18. The battery apparatus (100) according to any one of claims 1-17, wherein the U-shaped enclosing shell (21) is configured as an aluminum shell or a stainless steel shell.

19. The battery apparatus (100) according to any one of claims 2-17, wherein an end surface of each of the pouch battery cells (22) on a side far away from the first plate (211) is connected to the case (10) through an adhesive layer (12).

20. The battery apparatus (100) according to claim 19, wherein the case (10) is provided with a bottom plate (11), and the bottom plate (11) is connected to each of the pouch battery cells (22) through the adhesive layer (12).

21. The battery apparatus (100) according to claim 20, wherein the bottom plate (11) comprises a cold plate, and the adhesive layer (12) is located between the cold plate and the plurality of pouch battery cells (22).

22. The battery apparatus (100) according to claim 20, wherein the adhesive layer (12) comprises: an adhesive layer body (121) and an adhesive overflow part (122), the adhesive overflow part (122) is located on a side of the adhesive layer body (121) facing the plurality of pouch battery cells (22), and is located between adjacent pouch battery cells (22) and/or between the pouch battery cells (22) and the second plates (212).

23. The battery apparatus according to any one of claims 1-22, wherein each of the pouch battery cells (22) is any one of a lithium iron phosphate battery cell, a ternary lithium battery cell, and a solid-state battery cell.

24. The battery apparatus according to claim 23, wherein when each of the pouch battery cells (22) is a lithium iron phosphate battery cell, in a positive electrode material of each of the pouch battery cells (22), a usage ratio of a positive electrode active material, a positive electrode binder, and a positive electrode conductive agent is 96:1-3:1-3; when each of the pouch battery cells (22) is a ternary lithium battery, in a positive electrode material of each of the pouch battery cells (22), a usage ratio of a positive electrode active material, a positive electrode binder, and a positive electrode conductive agent is 96:2-3:1-2.

25. An electric device (200), comprising: the battery apparatus (100) according to any one of claims 1-24.

26. The electric device (200) according to claim 25, wherein the electric device (200) is a vehicle.

27. The electric device (200) according to claim 26, wherein the battery apparatus (100) is integrated in a chassis of the vehicle and an upper cover of the case (10) participates in defining a vehicle body floor.
